# FASCICULE DE BREVET EUROPEEN

(11) **EP 1 425 903 B1**
(45) Date de publication et mention de la délivrance du brevet: **27.09.2006**
(21) Numéro de dépôt: 02747519.3
(22) Date de dépôt: 07.06.2002
(51) Int. Cl.: H04N 5/217

(54) **PROCEDE DE COMMANDE D'UN DISPOSITIF PHOTOSENSIBLE**
STEUERUNGSVERFAHREN EINER PHOTOEMPFINDLICHEN VORRICHTUNG
METHOD FOR CONTROLLING A PHOTOSENSITIVE DEVICE

(30) Priorité: 19.06.2001 FR 0108038
(43) Date de publication de la demande: 09.06.2004
(73) Titulaire: Trixell S.A.S., 38430 Moirans (FR)
(72) Inventeur: ANDRE, Patrice, Thales Int. Property, F-94117 Arcueil Cedex (FR); NEYRET, Robert, Thales Int. Property, F-94117 Arcueil Cedex (FR); BOSSET, Bruno, Thales Int. Property, F-94117 Arcueil Cedex (FR); ATOYAN, Clément, Thales Intel. Property, F-94117 Arcueil Cedex (FR)
(74) Mandataire: Collet, Alain
(86) Numéro de dépôt international: PCT/FR2002/001965
(87) Numéro de publication internationale: WO 2002/104006

(56) Documents cités:
- US-A- 5 278 658
- US-A- 6 101 287

## Description

La présente invention concerne un procédé de commande d'un dispositif photosensible comportant une matrice de points photosensibles du type notamment réalisés par des techniques de dépôt de matériaux semi-conducteurs. L'invention concerne plus particulièrement (mais non exclusivement) la commande de tels dispositifs utilisés pour la détection d'images radiologiques.

Les techniques de dépôts en films minces de matériaux semi-conducteurs tels que le silicium amorphe hydrogéné (aSiH), sur des supports isolants en verre par exemple, permettent de réaliser des matrices de points photosensibles pouvant produire une image à partir d'un rayonnement visible ou proche du visible. Pour utiliser ces matrices à la détection d'images radiologique, il suffit d'interposer entre le rayonnement X et la matrice, un écran scintillateur pour convertir le rayonnement X en rayonnement lumineux dans la bande de longueurs d'onde auxquelles les points photosensibles sont sensibles.

Les points photosensibles qui forment ces matrices comprennent généralement un élément photosensible associé à un élément remplissant une fonction d'interrupteur. Le point photosensible est monté entre un conducteur de ligne et un conducteur de colonne. Selon les besoins, le dispositif photosensible comporte alors une pluralité de points photosensibles agencés en matrice ou en barrette.

L'élément photosensible est couramment constitué par une diode, montée en série avec l'élément interrupteur. L'élément interrupteur peut être par exemple une diode dite de commutation dont l'état " fermé " ou " passant " correspond à la polarisation qui la met en conduction directe, et dont l'état " ouvert " ou " bloqué " correspond à sa polarisation en inverse. Les deux diodes sont montées avec des sens de conduction opposés, dans une configuration dite " tête-bêche ". Une telle disposition est bien connue, notamment par la demande de brevet français 86 14058 (n° de publication 2 605 166) dans laquelle sont décrits, une matrice de points photosensibles du type à deux diodes en configuration " tête- bêche ", un procédé de lecture des points photosensibles, et une manière de réaliser un tel dispositif photosensible. Le matériau semi-conducteur amorphe produit de la rémanence. Ceci est lié à sa structure amorphe qui comporte un grand nombre de pièges, bien plus que dans les matériaux cristallins. Ces pièges sont des défauts de structure qui s'étendent sur toute la bande interdite. Ils retiennent des charges engendrées lors d'une prise d'image. Le matériau mémorise une image correspondant à une irradiation donnée et restitue des charges relatives à cette image au cours de la lecture de l'image suivante voire de plusieurs images suivantes. La qualité des images s'en ressent.

Un défaut affecte la qualité des images. Les composants semi-conducteurs utilisés dans de tels dispositifs photosensibles ne sont pas tous identiques et le dispositif photosensible possède de manière inhérente des inhomogénéités qui se traduisent par des zones altérées et qui varient dans le temps.

Pour essayer d'obtenir une image utile de qualité optimale, on effectue une correction de l'image utile à partir d'une image dite d'offset connue sous la dénomination française d'image noire généralement prise et stockée en début d'un cycle de fonctionnement. Cette image d'offset est l'image obtenue alors que le dispositif photosensible est exposé à un signal d'intensité nulle et correspond à une sorte d'image de fond. L'image d'offset varie en fonction de l'état électrique des composants des points photosensibles et de la dispersion de leurs caractéristiques électriques. L'image utile est celle lue alors que le dispositif photosensible a été exposé à un signal utile qui correspond à une exposition à un rayonnement X. Elle englobe l'image d'offset. La correction consiste à effectuer une soustraction entre l'image utile et l'image d'offset. Cette correction n'est fiable que si l'image d'offset n'a pas varié entre le moment où elle a été prise et le moment où l'image utile est prise. Il faut que les points photosensibles soient dans le même état électrique juste avant la prise de l'image d'offset et avant celle de l'image utile. En l'absence de commande, les composants semi-conducteurs sont à la recherche permanente d'un état d'équilibre qui peut être atteint en quelques heures car le temps mis pour les vider les pièges des charges stockées s'étale sur des gammes de temps comprises entre quelques microsecondes et quelques minutes voire même quelques heures. Après ce laps de temps leur état peut encore varier en fonction de la température ou de variations infinitésimales d'irradiation résiduelle.

Puisque la prise de l'image d'offset se fait généralement en début de cycle de fonctionnement du dispositif photosensible et que la prise de l'image utile, déclenchée à la discrétion du radiologue, se fait de manière aléatoire lorsque le besoin s'en fait sentir, il n'y a aucune raison pour que les composants semi-conducteurs soient tous dans le même état à ces deux instants qui sont séparés par un intervalle de temps variable.

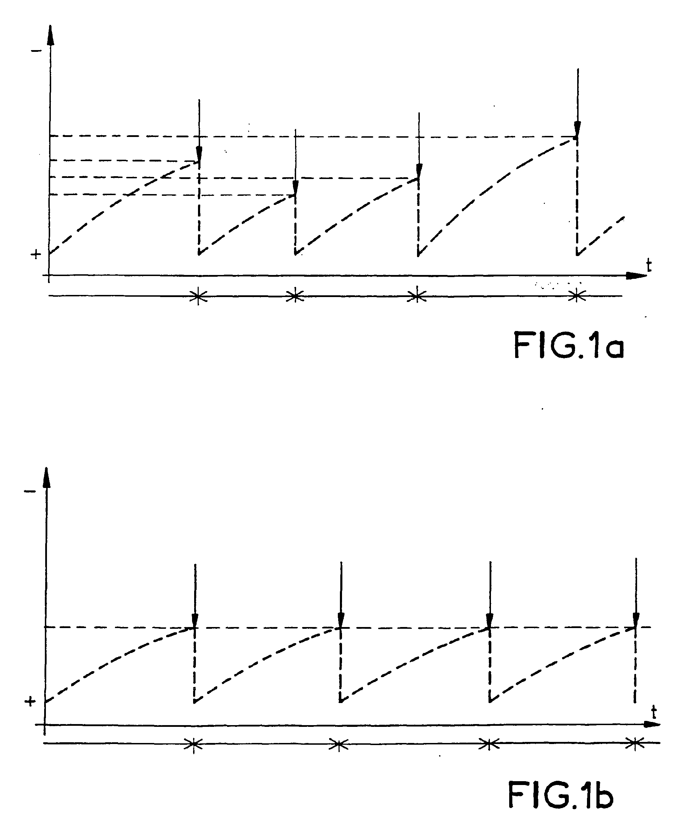

Les figures 1a, 1b symbolisent l'état de remplissage des pièges des composants d'un point photosensible d'un dispositif photosensible, auquel peut s'appliquer l'invention, au cours du temps. Les flèches représentent des cycles d'image. Par cycle d'image on entend la suite formée par une phase de prise d'image suivie d'une phase de lecture puis d'une phase d'effacement et de réinitialisation comme expliqué dans la demande de brevet FR-A-2 760 585. Durant la phase de prise d'image, les points photosensibles sont exposés à un signal à capter que ce signal soit un éclairement maximum ou l'obscurité, durant la phase de lecture une impulsion de lecture est appliquée aux conducteurs ligne adressés pour lire la quantité de charges accumulée lors de la prise d'image. Durant la phase d'effacement et de réinitialisation, les points photosensibles sont effacés, généralement optiquement et remis dans un état dans lequel ils sont réceptifs à une nouvelle prise d'image.

Entre deux cycles d'image successifs les points photosensibles sont laissés au repos mais leur état électrique évolue. On suppose que le premier cycle d'image représenté fournit l'image d'offset et les autres des images utiles à corriger avec l'image d'offset.

On voit bien que si les cycles d'image interviennent de manière aléatoire comme sur la figure 1 a, les états électriques du point photosensible étant différents en début de cycle, les images utiles corrigées avec l'image d'offset ne peuvent être fiables.

En revanche, sur la figure 1b les cycles d'image interviennent de manière régulière, par exemple toutes les cinq secondes, et au début de chaque cycle l'état électrique du point photosensible est sensiblement le même.

L'image d'offset n'a pas fluctué et la correction d'une image utile prise pendant un cycle avec l'image d'offset prise pendant un autre cycle précédent est fiable. L'inconvénient majeur de ce mode de fonctionnement est qu'il apporte beaucoup de contraintes puisque les différents cycles doivent se succéder de manière périodique pour obtenir le résultat escompté.

Cette utilisation est très restrictive et n'est pas compatible avec les attentes des radiologues qui veulent pouvoir réaliser des images utiles selon leurs besoins. La présente invention propose d'éviter cet inconvénient majeur tout en garantissant une image de qualité optimum.

Le document US-A-6 101 287 décrit une correction d'une image d'offset basée sur des points pris au moment de l'image utile. Ceci ralentit le processus de correction. L'invention permet également de pallier ce problème.

A cet effet, l'invention a pour objet un procédé de commande d'un dispositif photosensible comprenant au moins un point photosensible avec une photodiode reliée à un élément de commutation, consistant à soumettre le point photosensible lors d'une phase de lecture à un cycle d'images successives comportant une image utile précédée d'au moins une image d'offset réalisée à un instant initial, caractérisé en ce qu'on applique à l'image utile une correction fonction de l'image d'offset réalisée à l'instant initial et du temps séparant l'image utile de l'image d'offset réalisée à l'instant initial, et en ce que la correction fonction du temps (ti) est élaborée lors d'une phase de calibration précédant la phase de lecture.

L'invention sera mieux comprise et d'autres avantages apparaîtront à la lecture de la description détaillée de plusieurs modes de réalisation de l'invention donnés à titre d'exemple, modes de réalisation illustrés par le dessin joint dans lequel :
- les figures 1a, 1b, déjà décrites, représentent l'état des pièges des composants d'un point photosensible lors de son utilisation selon des procédés connus ;
- les figures 2 et 3 représentent des dispositifs photosensibles auxquels peut s'appliquer l'invention ;
- la figure 4 représente sous forme de chronogramme un exemple d'enchaînement de plusieurs images d'offset en phase de calibration.

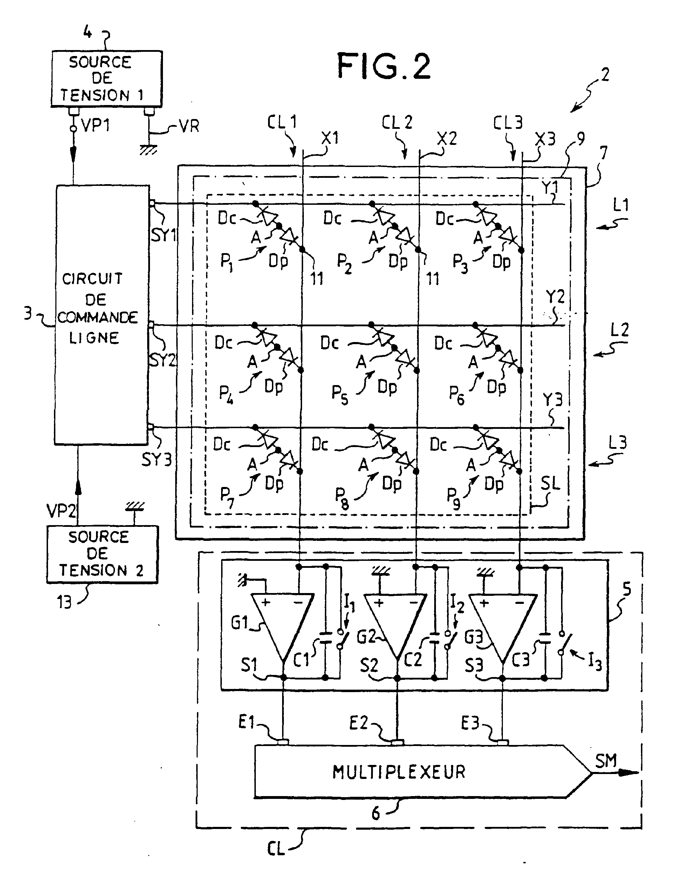

La figure 2 représente un schéma simplifié d'un dispositif photosensible 1, comportant une matrice 2 organisée de façon classique. La matrice 2 comporte des points photosensibles P1 à P9, formés chacun par une diode photosensible Dp et une diode de commutation Dc montées en série suivant une configuration tête-bêche. La matrice comporte des conducteurs en ligne Y1 à Y3 croisés avec des conducteurs en colonne X1 à X3, avec à chaque croisement, un point photosensible connecté entre un conducteur ligne et un conducteur colonne. Les points photosensibles P1 à P9 sont ainsi disposés suivant des lignes L1 à L3 et des colonnes CL1 à CL3.

Dans l'exemple de la figure 2, seulement 3 lignes et 3 colonnes sont représentées qui définissent 9 points photosensibles, mais une telle matrice peut avoir une capacité beaucoup plus grande, pouvant aller jusqu'à plusieurs millions de points. Il est courant par exemple de réaliser de telles matrices ayant des points photosensibles disposés suivant 3000 lignes et 3000 colonnes (dans une surface de l'ordre de 40 cm x 40 cm), ou bien disposés suivant une unique ligne et plusieurs colonnes pour constituer une barrette de détection, ou encore disposés suivant une unique ligne et une unique colonne pour constituer un unique point photosensible.

Le dispositif photosensible comporte un circuit de commande ligne 3, dont des sorties SY1, SY2, SY3 sont reliées respectivement aux conducteurs ligne Y1, Y2, Y3. Le circuit de commande ligne 3 dispose de différents éléments (non représentés), tels que par exemple, circuit d'horloge, circuits de commutation, registre à décalage, qui lui permettent de réaliser un adressage séquentiel des conducteurs lignes Y1 à Y3. Le dispositif photosensible comporte en outre une source de tension 4, délivrant au circuit de commande ligne 3 une tension VP1 servant à définir l'amplitude d'impulsions de polarisation appliquées aux conducteurs lignes et une source de tension 13, délivrant au circuit de commande ligne 3, une tension VP2 servant à définir l'amplitude d'impulsions de lecture appliquées aux conducteurs lignes. Ces deux sources de tension peuvent éventuellement être confondues.

Dans chaque point photosensible P1 à P9, les deux diodes Dp, Dc sont reliées entre elles soit par leur cathode, soit par leur anode comme dans l'exemple représenté. La cathode de la photodiode Dp est reliée à un conducteur colonne X1 à X3, et la cathode de la diode de commutation Dc est reliée à un conducteur ligne Y1 à Y3.

Dans la phase d'acquisition d'image ou de prise d'image, c'est-à-dire d'éclairement de la matrice 2 par un signal lumineux dit " utile ", les deux diodes Dp, Dc de chaque point photosensible P1 à P9 sont polarisées en inverse, et dans cet état elles constituent chacune une capacité. Il est à noter que généralement les deux diodes Dp, Dc sont conçues pour que la capacité présentée par la photodiode Dp soit la plus forte (de l'ordre par exemple de 50 fois).

Lors de l'exposition à un signal lumineux utile, des charges sont engendrées dans la photodiode Dp par l'éclairement du point photosensible P1 à P9 auquel elle appartient. Ces charges dont la quantité est fonction de l'intensité d'éclairement, s'accumulent en un point " A " sur le noeud (flottant) formé au point de jonction des deux diodes Dp, Dc. La lecture des points photosensibles P1 à P9 s'effectue ligne par ligne, simultanément pour tous les points photosensibles reliés à un même conducteur ligne Y1 à Y3. A cet effet, le circuit de commande ligne 3 applique à chaque conducteur ligne Y1 à Y3 adressé, une impulsion dite de lecture d'une amplitude donnée ; les conducteurs lignes qui ne sont pas adressés sont maintenus à un potentiel de référence Vr ou potentiel de repos, qui est la masse par exemple, et qui peut être le même potentiel que celui qui est appliqué aux conducteurs colonne X1 à X3.

L'éventuelle accumulation de charges au point " A " d'un point photosensible P1 à P9, entraîne en ce point une diminution de la tension, c'est-à-dire une diminution de la tension de polarisation inverse de la photodiode Dp. Avec certains modes de fonctionnement, l'application de l'impulsion de lecture à un conducteur ligne Y1 à Y3 a pour effet de restituer au potentiel du point "A" de tous les points photosensibles reliés à ce conducteur ligne, le niveau de polarisation qu'il possédait avant l'exposition au signal lumineux utile : il en résulte une circulation dans chacun des conducteurs colonne X1 à X3, d'un courant proportionnel aux charges accumulées au point "A" correspondant.

Les conducteurs colonne X1 à X3 sont reliés à un circuit de lecture CL, comprenant dans l'exemple un circuit intégrateur 5, et un circuit multiplexeur 6 formé par exemple d'un registre à décalage à entrées parallèles et sortie série pouvant être du type C.C.D ( de l'anglais " Charge Coupled Device "). Chaque conducteur colonne est relié à une entrée négative "-" d'un amplificateur G1 à G3 monté en intégrateur. Une capacité d'intégration C1 à C3 est montée entre l'entrée négative " - " et une sortie S1 à S3 de chaque amplificateur. La seconde entrée " + " de chaque amplificateur G1 à G3 est reliée à un potentiel qui dans l'exemple est le potentiel de référence Vr, potentiel qui par suite est imposé à tous les conducteurs colonne X1 à X3. Chaque amplificateur comporte un élément interrupteur 11 à 13 dit de remise à zéro (constitué par exemple par un transistor du type MOS), monté en parallèle avec chaque capacité d'intégration C1 à C3.

Les sorties S1 à S3 des amplificateurs sont reliées aux entrées E1 à E3 du multiplexeur 6. Cette disposition classique permet de délivrer " en série " et ligne après ligne, (L1 à L3) en sortie SM du multiplexeur 6, des signaux qui correspondent aux charges accumulées aux points " A " de tous les points photosensibles P1 à P9.

Il est à noter qu'il est connu aussi, pour remplir la fonction d'interrupteur qui, dans l'exemple de la figure 2, est tenue par la diode de commutation Dc, d'utiliser un transistor ; ce dernier présente par rapport à la diode une plus grande complexité de connexion, mais il offre des avantages dans la qualité de son état "passant ", avantages qui seront évoqués dans la suite de la description.

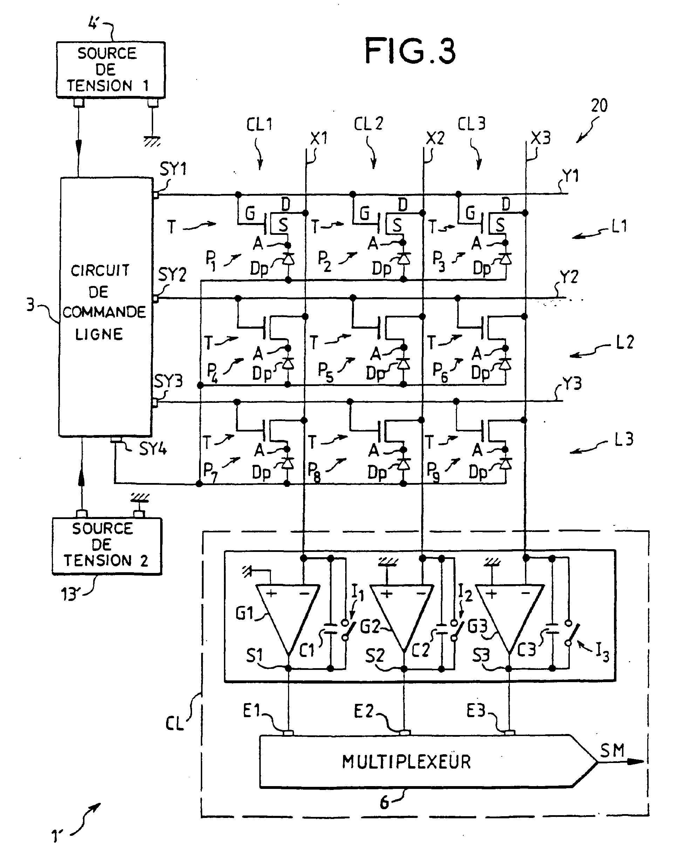

La figure 3 illustre schématiquement un dispositif photosensible 1' qui diffère de celui de la figure 2, principalement en ce qu'il comporte une matrice 20 dans laquelle les diodes de commutation Dc, sont remplacées par des transistors T par exemple réalisés par les techniques de dépôt de films en couches minces. Ces techniques sont connues dans la littérature anglo-saxonne sous le nom de Thin Film Transistor (TFT). Ces techniques peuvent également être utilisées pour réaliser la matrice 2 représentée figure 2.

Dans le schéma montré à la figure 3 à titre d'exemple, dans chaque point photosensible P1 à P9, le transistor T est relié par sa source S à la cathode de la photodiode Dp c'est-à-dire au point " A ", sa grille G est reliée au conducteur ligne Y1 à Y3 auquel appartient le point photosensible, et son drain D est relié au conducteur colonne X1 à X3 auquel appartient le point photosensible. Les anodes de toutes les photodiodes Dp sont réunies, et reliées à une sortie SY4 du circuit de commande ligne 3. La sortie SY4 délivre une tension dite de polarisation Vpolar, négative par rapport au potentiel de référence VR ou masse, de l'ordre par exemple de -5 volts, qui sert à constituer la polarisation en inverse des photodiodes Dp ; le circuit de commande ligne 3 reçoit par exemple cette tension de polarisation d'une source d'alimentation 4'.

Pour mieux comprendre le fonctionnement général des dispositifs représentés aux figures 2 et 3, on peut se reporter à la demande de brevet français publiée sous le n° FR 2 760 585.

Plus précisément, afin d'améliorer la correction d'offset, les dispositifs précédemment décrits peuvent fonctionner de la façon suivante.

Lors d'une phase de lecture, on soumet le dispositif photosensible à un cycle d'images successives comportant une image utile précédée d'au moins une image d'offset réalisée à un instant initial. Selon l'invention, on applique à l'image utile une correction fonction de l'image d'offset réalisée à l'instant initial et du temps séparant l'image utile de l'image d'offset réalisée à l'instant initial.

On définit un intervalle de temps utilisable au cours duquel l'image utile devra intervenir. Le début de l'intervalle de temps utilisable correspond à la fin de l'acquisition de l'image d'offset (acquise en tâche de fond par le système). La fin de l'intervalle de temps utilisable correspond au début de l'acquisition de l'image d'offset suivante. Si un opérateur souhaite réaliser une image utile après la fin de l'intervalle de temps utilisable, il devra donc attendre que la nouvelle image d'offset soit réalisée. La fin de l'acquisition de cette nouvelle image d'offset marque le début d'un nouvel intervalle de temps utilisable.

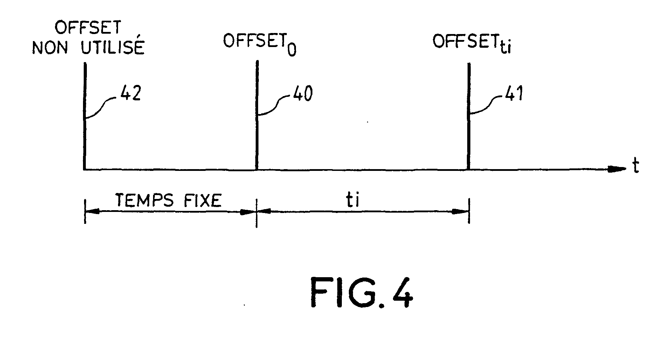

Plus précisément, la correction fonction du temps, correction définie précédemment, est élaborée lors d'une phase de calibration généralement réalisée au cours de la fabrication du dispositif photosensible. La phase de calibration précède la phase de lecture au cours de laquelle interviennent l'image d'offset réalisée à l'instant initial et l'image utile. Au cours de la phase de calibration, on réalise plusieurs couples d'image d'offset. Les deux images d'offset de chaque couple sont séparées d'une durée donnée ti. Deux images d'un couple sont représentées sur le chronogramme de la figure 4. La première image dite offset ₀ porte le repère 40 et la seconde image dite offset ti porte le repère 41. On choisit pour les différents couples d'image d'offset des durées ti se répartissant dans un intervalle de temps identique à l'intervalle de temps utilisable, employé en phase de lecture. Pour chaque couple d'image d'offset, on détermine, puis on mémorise la différence entre la deuxième image d'offset 41 et la première image d'offset 40. Les différences mémorisées sont indexées à l'aide du temps ti correspondant.

En phase de lecture, on soustrait de l'image utile, une image d'offset courante fonction de l'image d'offset réalisée à l'instant initial et de la différence mémorisée correspondant sensiblement au temps séparant l'image utile de l'image d'offset réalisée à l'instant initial. Plus précisément, si par convention, on choisit que la différence mémorisée est égale à la première image d'offset 40 à laquelle on soustrait la deuxième image d'offset 41, l'image d'offset courante est alors sensiblement égale à l'image d'offset réalisée à un instant initial à laquelle on soustrait la différence mémorisée.

A titre d'alternative, en phase de calibration, il est possible de mémoriser simplement la deuxième image 41 de chaque couple. Puis en phase de lecture on soustrait la deuxième image d'offset 41 d'un couple correspondant sensiblement au temps ti séparant l'image utile de l'image d'offset réalisée à un instant initial.

Avantageusement, afin d'améliorer la qualité des différences mémorisées, on réalise en phase de calibration pour chaque couple, une image d'offset non utilisée 42. Cette image 42 précède la première image 40 et un temps sensiblement fixe sépare l'image d'offset non utilisée 42 de la première image d'offset 40. Avantageusement, le temps sensiblement fixe est égal au temps séparant deux images d'offset réalisées en phase de lecture. Dans certains cas d'utilisation, le temps sensiblement fixe de la phase de lecture peut être différent (généralement supérieur) de celui de la phase de calibration.

En phase de calibration, pour chaque couple d'image d'offset, la différence mémorisée peut être déterminée pour chaque point photosensible du dispositif. Ceci permet de tenir compte des écarts temporels de relaxation des pièges pouvant exister entre les différents points photosensibles. En revanche, ceci présente l'inconvénient d'ajouter du bruit à la correction effectuée sur l'image d'offset courante.

En phase de calibration, on peut également mémoriser une différence globale pour l'ensemble du dispositif. Cette différence entre la deuxième image d'offset 41 et la première image d'offset 40 est alors déterminée sur le niveau moyen de chaque image composant le couple d'images d'offset. Ceci ne génère pas de bruit sur la correction appliquée à l'image d'offset courante, mais ne tient pas compte d'écarts éventuels entre les différents points photosensibles du dispositif.

En phase de calibration, pour chaque couple d'image d'offset, la différence mémorisée peut également être déterminée sur le niveau moyen de parties de chaque image d'offset. Cette variante est par exemple utile lorsque les points photosensibles sont réalisés sur plusieurs substrats distincts raboutés pour former la matrice 2.

On sait que les images d'offset peuvent varier en fonction de la température. On peut donc appliquer à l'image utile une correction fonction de la température à laquelle l'image utile est réalisée. Plus précisément, on peut mémoriser des différences telles que définies précédemment avec une double indexation, une première fonction du temps ti et une seconde fonction de la température.

En variante, on peut se passer d'une phase de calibration proprement dite et, réaliser l'image d'offset ₜᵢ après l'image utile. On peut mettre en oeuvre cette variante en réalisant, après l'image utile, un cycle comprenant une image d'offset ₀ 40 suivi d'une image d'offset ₜᵢ 41. Les images 40 et 41 sont alors distantes d'une durée sensiblement égale à ti. De façon plus simple et plus rapide, on peut se contenter de réaliser une image d'offset ₜᵢ distante de l'image utile de la durée ti.

## Revendications

1. Procédé de commande d'un dispositif photosensible comprenant au moins un point photosensible avec une photodiode (Dp) reliée à un élément de commutation, consistant à soumettre le point photosensible lors d'une phase de lecture à un cycle d'images successives comportant une image utile précédée d'au moins une image d'offset réalisée à un instant initial, **caractérisé en ce qu'**on applique à l'image utile une correction fonction de l'image d'offset réalisée à l'instant initial et du temps (ti) séparant l'image utile de l'image d'offset réalisée à l'instant initial, et **en ce que** la correction fonction du temps (ti) est élaborée lors d'une phase de calibration précédant la phase de lecture.

2. Procédé selon la revendication 1, **caractérisé en ce qu'**en phase de calibration le procédé consiste à réaliser plusieurs couples d'images d'offset, les deux images de chaque couple étant séparées d'une durée donnée (ti), les durées données (ti) des différents couples étant répartis à l'intérieur d'un intervalle de temps utilisable en phase de lecture, à déterminer puis à mémoriser la différence entre la deuxième image d'offset (41) et la première image d'offset (40) de chaque couple, puis en phase de lecture à soustraire une image d'offset courante de l'image utile, l'image d'offset courante étant fonction de l'image d'offset réalisée à l'instant initial et de la différence mémorisée correspondant sensiblement au temps séparant l'image utile de l'image d'offset réalisée à un instant initial.

3. Procédé selon la revendication 1, **caractérisé en ce qu'**il comprend une phase de calibration précédent la phase de lecture, **en ce qu'**en phase de calibration le procédé consiste à réaliser plusieurs couples d'images d'offset, les deux images de chaque couple étant séparées d'une durée donnée (ti), les durées données (ti) des différents couples étant répartis à l'intérieur d'un intervalle de temps utilisable en phase de lecture, à mémoriser la deuxième image d'offset (41) de chaque couple, puis en phase de lecture à soustraire la deuxième image d'offset (41) d'un couple correspondant sensiblement au temps (ti) séparant l'image utile de l'image d'offset réalisée à un instant initial.

4. Procédé selon la revendication 2, **caractérisé en ce que** l'image d'offset courante est sensiblement égale à l'image d'offset réalisée à l'instant initial, à laquelle on soustrait la différence mémorisée conventionnellement choisie comme égale à la première image d'offset 40 à laquelle on soustrait la deuxième image d'offset 41.

5. Procédé selon l'une quelconque des revendications 2 à 4, **caractérisé en ce qu'**en phase de calibration, chaque couple d'image d'offset est précédé d'une image d'offset non utilisée et **en ce que**, pour l'ensemble des couples, un temps sensiblement fixe sépare l'image d'offset non utilisée de la première image d'offset du couple considéré.

6. Procédé selon l'une quelconque des revendications 2 ou 4 ou 5, **caractérisé en ce qu'**en phase de calibration, la différence entre la deuxième image d'offset et la première image d'offset est déterminée pour chaque point photosensible.

7. Procédé selon l'une quelconque des revendications 2 ou 4 ou 5, **caractérisé en ce qu'**en phase de calibration, la différence entre la deuxième image d'offset (41) et la première image d'offset (40) est déterminée sur le niveau moyen de chaque image d'offset.

8. Procédé selon l'une quelconque des revendications 2 ou 4 ou 5, **caractérisé en ce qu'**en phase de calibration, la différence entre la deuxième image d'offset (41) et la première image d'offset (40) est déterminée sur le niveau moyen de parties de chaque image d'offset.

9. Procédé selon la revendication 1, **caractérisé en ce qu'**il consiste à réaliser une image d'offset courante après l'image utile et séparée d'une durée (ti) de l'image utile, la durée (ti) correspondant au temps séparant l'image utile de l'image d'offset réalisée à l'instant initial, puis à soustraire une image d'offset courante de l'image utile.

10. Procédé selon l'une des revendications précédentes, **caractérisé en ce qu'**on applique à l'image utile une correction fonction de la température à laquelle l'image utile est réalisée.

## Claims

1. Method of driving a photosensitive device comprising at least one photosensitive pixel with a photodiode (Dp) connected to a switching element, consisting in subjecting the photosensitive pixel during a read phase to a cycle of successive images comprising a useful image preceded by at least one offset image taken at an initial instant, **characterized in that** a correction is applied to the useful image, said correction being based on the offset image taken at the initial instant and on the time (ti) separating the useful image from the offset image taken at the initial instant, and **in that** the connection dependent on the time (ti) is made during a calibration phase preceding the read phase.

2. Method according to Claim 1, **characterized in that**, in calibration phase, the method consists in taking several pairs of offset images, the two images of each pair being separated by a given time (ti), the given times (ti) of the various pairs being distributed within a usable time interval in read phase, in determining and then storing the difference between the second offset image (41) and the first offset image (40) of each pair, and then, in read phase, in subtracting a current offset image from the useful image, the current offset image depending on the offset image taken at the initial instant and on the stored difference corresponding approximately to the time separating the useful image from the offset image taken at an initial instant.

3. Method according to Claim 1, **characterized in that** it includes a calibration phase preceding the read phase, **in that**, in calibration phase, the method consists in taking several pairs of offset images, the two images of each pair being separated by a given time (ti), the given times (ti) of the various pairs being distributed within a usable time interval in read phase, in storing the second offset image (41) of each pair and then, in read phase, in subtracting the second offset image (41) from a pair corresponding approximately to the time (ti) separating the useful image from the offset image taken at an initial instant.

4. Method according to Claim 2, **characterized in that** the current offset image is approximately equal to the offset image taken at the initial instant, from which is subtracted the stored difference conventionally chosen as being equal to the first offset image (40) from which the second offset image (41) is subtracted.

5. Method according to any one of Claims 2 to 4, **characterized in that**, in calibration phase, each offset image pair is preceded by an unused offset image and **in that**, for all of the pairs, an approximately fixed time separates the unused offset image from the first offset image of the pair in question.

6. Method according to Claim 2 or Claim 4 or Claim 5, **characterized in that**, in calibration phase, the difference between the second offset image and the first offset image is determined for each photosensitive pixel.

7. Method according to Claim 2 or Claim 4 or Claim 5, **characterized in that**, in calibration phase, the difference between the second offset image (41) and the first offset image (40) is determined on the basis of the mean level of each offset image.

8. Method according to Claim 2 or Claim 4 or Claim 5, **characterized in that**, in calibration phase, the difference between the second offset image (41) and the first offset image (40) is determined on the basis of the mean level of parts of each offset image.

9. Method according to Claim 1, **characterized in that** it consists in taking a current offset image after the useful image and separated by a time (ti) from the useful image, the time (ti) corresponding to the time separating the useful image from the offset image taken at the initial instant, and then in subtracting a current offset image from the useful image.

10. Method according to one of the preceding claims, **characterized in that** a correction is applied to the useful image, said correction depending on the temperature at which the useful image is taken.

## Patentansprüche

1. Verfahren zur Steuerung einer fotoempfindlichen Vorrichtung, die mindestens einen fotoempfindlichen Punkt mit einer Fotodiode (Dp) aufweist, die mit einem Schaltelement verbunden ist, wobei das Verfahren darin besteht, den fotoempfindlichen Punkt während einer Lesephase einem Zyklus von aufeinanderfolgenden Bildern zu auszusetzen, der ein Nutzbild aufweist, dem mindestens ein in einem Anfangszeitpunkt hergestelltes Offsetbild vorausgeht, **dadurch gekennzeichnet, dass** an das Nutzbild eine vom im Anfangszeitpunkt hergestellten Offsetbild und von der das Nutzbild von dem im Anfangszeitpunkt hergestellten Offsetbild trennenden Zeit (ti) abhängige Korrektur angewendet wird, und dass die von der Zeit (ti) abhängige Korrektur während einer vor der Lesephase liegenden Kalibrierungsphase ausgearbeitet wird.

2. Verfahren nach Anspruch 1, **dadurch gekennzeichnet, dass** es in der Kalibrierungsphase darin besteht, mehrere Paare von Offsetbildern herzustellen, wobei die beiden Bilder jedes Paars durch eine gegebene Zeitdauer (ti) getrennt sind, wobei die gegebenen Zeitdauern (ti) der verschiedenen Paare innerhalb eines in der Lesephase verwendbaren Zeitintervalls verteilt sind, die Differenz zwischen dem zweiten Offsetbild (41) und dem ersten Offsetbild (40) jedes Paars zu bestimmen und dann zu speichern, und dann in der Lesephase ein laufendes Offsetbild vom Nutzbild zu subtrahieren, wobei das laufende Offsetbild von dem im Anfangszeitpunkt hergestellten Offsetbild und von der gespeicherten Differenz abhängt, die im Wesentlichen der Zeit entspricht, die das Nutzbild von dem in einem Anfangszeitpunkt hergestellten Offsetbild trennt.

3. Verfahren nach Anspruch 1, **dadurch gekennzeichnet, dass** es vor der Lesephase eine Kalibrierungsphase aufweist, dass es in der Kalibrierungsphase darin besteht, mehrere Paare von Offsetbildern herzustellen, wobei die beiden Bilder jedes Paars durch eine gegebene Zeitdauer (ti) getrennt sind, wobei die gegebenen Zeitdauern (ti) der verschiedenen Paare innerhalb eines in der Lesephase verwendbaren Zeitintervalls verteilt sind, das zweite Offsetbild (41) jedes Paars zu speichern, und dann in der Lesephase das zweite Offsetbild (41) von einem Paar zu subtrahieren, das im Wesentlichen der Zeit (ti) entspricht, die das Nutzsignal von dem in einem Anfangszeitpunkt hergestellten Offsetbild trennt.

4. Verfahren nach Anspruch 2, **dadurch gekennzeichnet, dass** das laufende Offsetbild im Wesentlichen gleich dem im Anfangszeitpunkt hergestellten Offsetbild ist, von dem die gespeicherte Differenz subtrahiert wird, die üblicherweise als gleich dem ersten Offsetbild (40) gewählt wird, von dem das zweite Offsetbild (41) subtrahiert wird.

5. Verfahren nach einem der Ansprüche 2 bis 4, **dadurch gekennzeichnet, dass** in der Kalibrierungsphase vor jedem Paar von Offsetbildern ein nicht genutztes Offsetbild liegt, und dass für die Gesamtheit der Paare eine im Wesentlichen feste Zeit das nicht genutzte Offsetbild vom ersten Offsetbild des betrachteten Paars trennt.

6. Verfahren nach einem der Ansprüche 2 oder 4 oder 5, **dadurch gekennzeichnet, dass** in der Kalibrierungsphase die Differenz zwischen dem zweiten Offsetbild und dem ersten Offsetbild für jeden fotoempfindlichen Punkt festgelegt wird.

7. Verfahren nach einem der Ansprüche 2 oder 4 oder 5, **dadurch gekennzeichnet, dass** in der Kalibrierungsphase die Differenz zwischen dem zweiten Offsetbild (41) und dem ersten Offsetbild (40) durch den mittleren Pegel jedes Offsetbilds festgelegt wird.

8. Verfahren nach einem der Ansprüche 2 oder 4 oder 5, **dadurch gekennzeichnet, dass** in der Kalibrierungsphase die Differenz zwischen dem zweiten Offsetbild (41) und dem ersten Offsetbild (40) auf dem mittleren Pegel von Teilen jedes Offsetbilds festgelegt wird.

9. Verfahren nach Anspruch 1, **dadurch gekennzeichnet, dass** es darin besteht, ein laufendes Offsetbild nach dem Nutzbild und von dem Nutzbild durch eine Zeitdauer (ti) getrennt herzustellen, wobei die Zeitdauer (ti) der Zeit entspricht, die das Nutzbild von dem im Anfangszeitpunkt hergestellten Offsetbild trennt, und dann ein laufendes Offsetbild vom Nutzbild zu subtrahieren.

10. Verfahren nach einem der vorhergehenden Ansprüche, **dadurch gekennzeichnet, dass** an das Nutzbild eine Korrektur angewendet wird, die von der Temperatur abhängt, bei der das Nutzbild hergestellt wird.
